# EUROPEAN PATENT APPLICATION

(11) **EP 2 060 858 A2**
(43) Date of publication of application: **20.05.2009**
(21) Application number: 08168774.1
(22) Date of filing: 10.11.2008
(51) Int. Cl.: F24J 3/08

(54) **Geothermal collector**

(30) Priority: 16.11.2007 ES 200703126
(71) Applicant: Geotics Innova, S.L., 08202 Sabadell (Barcelona) (ES)
(72) Inventor: Viñals Adell, Manuel, 08192, Sant Quirze del Vallès (Barcelona (ES)
(74) Representative: Barlocci, Anna

(57) **Abstract**

Geothermal collector comprising an input duct (10), an output duct (11), and a plurality of spaced tubes (12) having a cross-section smaller than the cross-section of the input duct (10) and the output duct, each of said tubes (12) being connected at its both ends to the input duct and the output duct (11), respectively. Said tubes are shaped as an "U" and are preferably made as a single piece. The connection of one tube to the input duct is provided with a hole effected on the input duct, the area of said hole being smaller than the area of the cross-section of said tube, in order to hinder the flow and induce turbulences inside the tube, though the same effect can be achieved by inserting obstacles along the tube.

## Description

The present invention is related to a geothermal collector comprising an input duct and an output duct through both of which a fluid for exchanging and transporting heat can flow. Such a collector can work buried in a vertical trench so that the fluid can exchange heat with the surrounding ground.

### BACKGROUND ART

It is known to use geothermal energy collectors that work in combination with heat pumps similar to those employed in conventional climatization apparatuses. Geothermal heat pumps differ from atmospheric heat pumps, which are employed in conventional climatization, in that they exchange heat with the ground instead of exchanging it with the air. The heat exchange with the ground takes place at the geothermal collector.

Generally speaking, a heat pump is a machine that absorbs heat from a thermal source and delivers the heat to a thermal sink at a higher temperature. Depending on the source and the sink, a heat pump can work as either a heater or a cooler.

Conventional atmospheric heat pumps have a relatively low energy efficiency (delivered energy/absorbed energy), both as heaters and as coolers. In fact, in winter the pump must absorb heat from air at a low temperature, near 0° C, and in summer it must deliver heat to hot air, at more than 30° C. In both cases, the energy consumed by the heat pump is quite high.

Geothermal heat pumps have a much higher energy efficiency because they exchange heat with the ground, which can be either a thermal source or a thermal sink at a substantially constant temperature, at least beyond a certain depth. In fact, in the Mediterranean area the ground is normally at a temperature of about 15° C beyond a depth of 2 or 3 metres, with little difference between summer and winter. In summer, since the temperature of the ground is actually lower that the air temperature, the energy efficiency of a geothermal heat pump working as a cooler can be very high, because the cooler ground acts as a thermal sink.

A geothermal collector comprises a heat exchanger for exchanging heat with the ground; said heat exchanger can take different shapes and can be installed with different arrangements. The heat exchanger includes a duct for a fluid that flows into the collector at a temperature and flows out of the collector at another temperature. In winter, the output temperature of the fluid (flowing out of the heat exchanger) is higher than its input temperature, and this increase is used for heating. In summer, the output temperature is lower than the input temperature, and this decrease is used for cooling.

In order to improve the heat exchange the duct in the exchanger is normally shaped as a coil. It goes without saying that the greater the heat exchange between the exchanger and the surrounding ground the greater the efficiency of a geothermal heat pump; and the larger the exchanger surface (and the larger the heat flow between the ground and the exchanger) the larger the heat exchange between the ground and the exchanger.

WO 2005/015095 (IVT INDUSTRIER AB) discloses a collector comprising a series of tubes that are parallel to each other and are connected to each other to form a single tortuous duct, like in a radiator. Each pair of tubes are connected by two 90° bends forming one180° bend. Each pair of adjacent (not successive) 90° bends are connected by aeration channels. As can be seen, this assembly is complicated and expensive.

In patent application ES200502293 the applicant himself presents a heat exchanging panel for geothermal collectors comprising a coil and a heat conducting block that houses at least a portion of said coil. Said block comprises at least two profiles provided with means of mutual engagement, said means being arranged as concavities and convexities that snap-fit. The engagement between two adjacent profiles defines the housing for at least a portion of the coil. The faces of the heat conducting block are covered with an resilient cover capable of compensating the contractions that could impair the contact between the block and the ground.

Such a collector reaches a high efficiency but is not cheap, and a greater cost is not always compensated by the enhanced efficiency.

### SUMMARY OF THE INVENTION

It is an object of the present invention to provide a geothermal collector easy to assemble and install, and not requiring any complicated work.

According to one aspect of the invention, the geothermal collector comprises a plurality of spaced tubes having a cross-section smaller than the cross-section of the input duct and the output duct, each of said tubes being connected at its both ends to the input duct and the output duct, respectively.

Thus, with this simple arrangement a heat exchanger having an acceptable efficiency is obtained. The tubes are spaced for homogeneously distributing the flow and their cross-section is smaller than the cross-section of the input and output ducts to further promote a good flow distribution among the tubes.

The tubes are preferably shaped as an "U". In this way the tubes can be relatively long while being manageable too. Besides they can be buried in a narrow trench.

Preferably, at least one tube is made as a single piece, but it can also be made of two or more pieces.

In an embodiment, the connection of at least one tube to the input duct is provided with a hole effected on the input duct, the area of said hole being smaller than the area of the cross-section of said tube. Preferably, the area of the hole is at least 10 times smaller than the area of the cross-section of the tube. In this way the head loss in each tube can be suitably adjusted and turbulences can be induced in order to enhance the heat exchange between the fluid and the walls of the tube.

In an embodiment, at least one tube contains an obstacle for inducing turbulences and causing a head loss, although said at least one tube can contain a plurality of obstacles.

In an embodiment, at least one tube is at least 6 metres long, and in another embodiment at least one tube is at least 20 metres long, so that a well use can be made of relatively deep trenches.

In an embodiment, the spacing between the input duct and the output duct is, at least in a portion, of less than 120 cm, though it is preferred for said spacing to be of less than 60 cm and, consequently, suitable to insert the heat exchanger in a narrow vertical trench.

In an embodiment, the fluid enters the input duct in the vicinity of the first of the tubes, and exits the output duct in the vicinity of the last of the tubes, in order to achieve a more stable and uniform flow.

In an embodiment, the tubes are made of polyethylene, which is a cheap, resilient, resistant and easily manageable material.

### BRIEF DESCRIPTION OF THE DRAWINGS

Some embodiments of the present invention will be described in the following, only by way of non-limiting example, with reference to the appended drawings, in which:
figure 1 is a partial perspective view of a heat exchanger;
figure 2 is a partial plant view of the exchanger of figure 1;
figure 3 is a detail of figure 2;
figure 3A is a cross-section view taken on the line A-A of figure 3;
figure 4 is a schematic view of some obstacles that can be inserted in a tube;
and figure 5 is a schematic plant view of a geothermal collector.

### DESCRIPTION OF PARTICULAR EMBODIMENTS

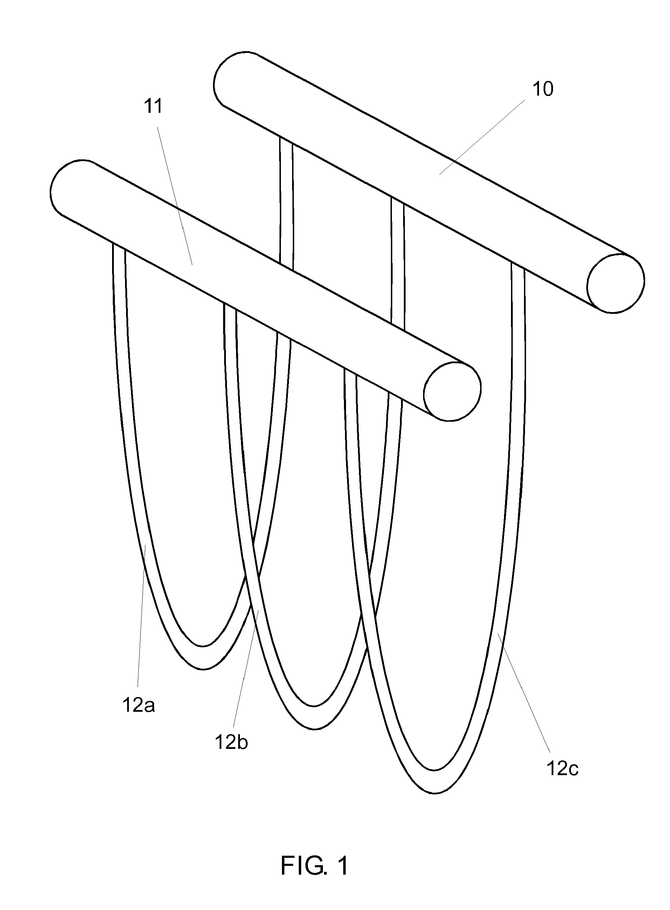

Figure 1 shows a portion of a heat exchanger that is a part of a geothermal collector. The heat exchanger comprises a general input duct 10, a general output duct 11, and a plurality of spaced tubes (that is, at least two) 12a, 12b, etc (in the following said plurality of tubes will be referred to by the reference numeral 12) arranged between the input duct 10 and the output duct 11. A fluid flows through all these ducts and tubes and the temperature of said fluid changes as it runs through the exchanger.

The input duct 10 and the output duct 11 extend parallel to each other, at least in the shown portion that corresponds to the heat exchanger (beyond the exchanger the input and output ducts are connected to the heat pump and may be arranged differently). The input duct 10 and the output duct 11 are connected by the tubes 12 of the exchanger, said tubes 12 being also parallel to each other but perpendicular to the input and output ducts. The diameter of the tubes 12 is smaller than the diameter of the input and output ducts.

Figure 1 shows a portion of the input and output ducts with some tubes 12 arranged between them, but both the ducts and the tubes can extend beyond the ends shown in the drawing.

After the heat exchanger has been installed, each tube 12, which is made of a flexible material, takes an "U" shape hanging from the input duct 10 and the output duct 11, said ducts extending substantially horizontally, though not necessarily at the same level. This arrangement is for installing the heat exchanger, which is normally buried in a long deep narrow vertical trench.

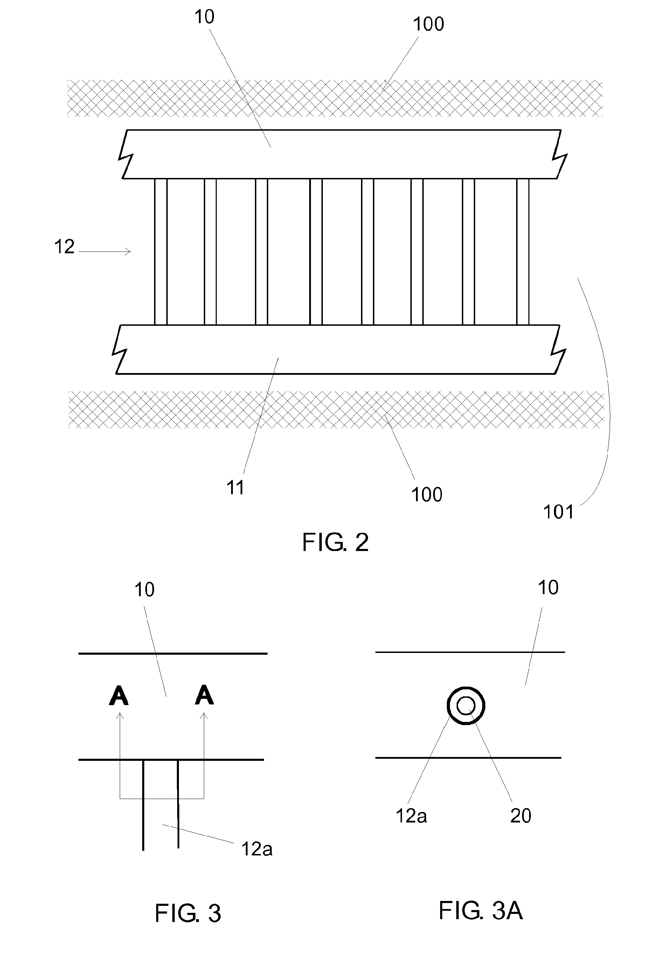

Figure 2 shows a portion of said trench, referenced by numeral 101. Said trench 101 is viewed from above, and the ground at both sides of the trench is referenced by numeral 100. The heat exchanger is located inside the trench, with the tubes 12 hanging towards the bottom thereof. It is to be understood that he heat exchanger extends beyond the ends shown in the drawing.

Figure 3 shows an enlarged view of the connection of tube 12a (for example) to the input duct 10, and figure 3A shows the same connection viewed in cross-section on the plane represented by line A-A of figure 3.

As can be seen in figure 3A, the connection of a tube 12 to the input duct 10 comprises a hole 20 made on the input duct (and the situation can be analogous with respect to the output duct 11). The diameter of said hole 20 should be accurately defined; it is normally smaller than the inner diameter of the tube 12a, for reasons explained below.

If the hole 20 is too big, then most of the flow entering the input conduct is gathered in the first few tubes 12 (as seen in the flow sense) of the heat exchanger, and little flow reaches the last tubes of the exchanger, but if the hole 20 is too small, then the head loss in the tubes 12 is too big, so that the flow through the tubes 12 is small and, consequently, there is relatively little heat exchanging, whereby the energy efficiency of the heat exchanger is low.

Thus, for the heat exchanger to work optimally the size of the hole 20 should be adjusted depending on the size of the exchanger and the flow rate.

Besides, when passing from the input duct 10 to the tube 12 the fluid goes through a narrowing, in order to facilitate a turbulent flow in the tube 12. Thus the heat exchange between the fluid and the wall of the tube is increased.

There are other ways of promoting said turbulence and of causing a head loss suitable for achieving a convenient distribution among the tubes 12, like for instance to place an axial structure as an obstacle, or provided with some obstacles, inside the tube 12. Said obstacle could be shaped as a spiral or a helix or could have any suitable shape, either regular or irregular. Moreover, said obstacle can be extended along the tube 12 or just along a portion thereof. Said axial structure could even consist of a plurality of obstacles fixed to the inner wall of the tube 12.

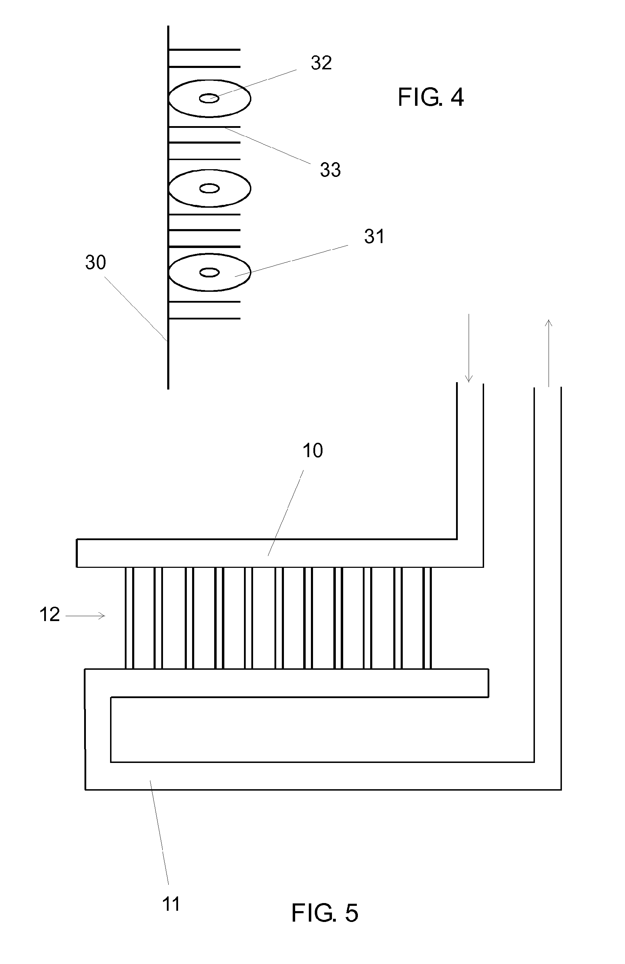

Figure 4 shows a portion of an example of an obstacle structure that may be inserted in one or several of the tubes 12. It comprises an axial strand 30 on which some discs 32 having a central hole 32 are transversally arranged, and some filaments 33 too.

A suitable material for the ducts, tubes or obstacles is, for example, polyethylene, which has a small coefficient of thermal expansion in the working temperature range. Nylon is also adequate for the obstacles in the tubes 12.

Figure 5 schematically shows a geothermal collector according to the invention, comprising the aforementioned input duct 10, output duct 11 and tubes 12. In this embodiment, the exit from the output duct in the heat exchanger is arranged after the last of the tubes 12, i.e., at the end opposite to the entry to the input duct, whereby the flow sense through the input duct 10 and through the output duct 11 is the same, instead of there being a "return" sense through the output duct, as would be the case should the exit from the exchanger be near the first of the tubes 12. With this arrangement the correct distribution of flow among the tubes 12 is facilitated.

The tubes 12 can be as long as allowed by the depth of the trench 101, since the making of the set ducts+tubes is practically the same for long and for short tubes; anyway the tubes 12 are extended and connected to the input duct 10 and the output duct 11 and then are bent to adopt the "U" shape.

The heat exchanger can be modularly made and assembled, i.e., by complete units of ducts 10 and 11 and tubes 12. Said units can be provided with snap-fit devices in the ends of the input and output ducts, in order to facilitate their connection to adjacent units in the working site or in the trench 101.

In order to facilitate inserting the heat exchanger in the trench, it is convenient to use clamps (not shown) for holding together the two straight portions of the U of some or all of the tubes 12. These clamps can be removed after placing the exchanger in the trench, whereby the Us will tend to open and will abut against the vertical walls of the trench. In this way the exchanger will be firmly held inside the trench, thus reducing the risk of deformation or breakage when filling the trench with earth or another material.

Although only particular embodiments of the invention have been shown and described in the present specification, the skilled man will be able to introduce modifications and substitute any technical features thereof with others that are technically equivalent, depending on the particular requirements of each case, without departing from the scope of protection defined by the appended claims.

## Claims

1. Geothermal collector comprising an input duct (10) and an output duct (11) through both of which a fluid for exchanging and transporting heat can flow, **characterized in that** it also comprises a plurality of spaced tubes (12) having a cross-section smaller than the cross-section of the input duct (10) and the output duct (11), each of said tubes (12) being connected at its both ends to the input duct (10) and the output duct (11), respectively.

2. Geothermal collector according to claim 1, wherein at least one tube (12) is shaped as an "U".

3. Geothermal collector according to claim 1 or claim 2, wherein at least one tube (12) is made as a single piece.

4. Geothermal collector according to claim 1 or claim 2, wherein at least one tube (12) is made of at least two pieces.

5. Geothermal collector according to any of the preceding claims, wherein the connection of at least one tube (12) to the input duct (10) is provided with a hole (20) effected on the input duct (10), the area of said hole (20) being smaller than the area of the cross-section of said tube (12).

6. Geothermal collector according to claim 5, wherein the area of the hole (20) is at least 10 times smaller than the area of the cross-section of the tube (12).

7. Geothermal collector according to any of the preceding claims, wherein at least one tube (12) contains an obstacle for inducing turbulences and causing a head loss.

8. Geothermal collector according to claim 7, wherein at least one tube (12) contains a plurality of obstacles (31, 32; 33).

9. Geothermal collector according to any of the preceding claims, wherein at least one tube (12) is at least 6 metres long.

10. Geothermal collector according to claim 9, wherein at least one tube (12) is at least 20 metres long.

11. Geothermal collector according to any of the preceding claims, wherein the spacing between the input duct (10) and the output duct (11) is, at least in a portion, of less than 120 cm.

12. Geothermal collector according to any of the preceding claims, wherein the spacing between the input duct (10) and the output duct (11) is, at least in a portion, of less than 60 cm.

13. Geothermal collector according to any of the preceding claims, wherein the fluid enters the input duct (10) in the vicinity of the first of the tubes (12), and exits the output duct (11) in the vicinity of the last of the tubes (12).

14. Geothermal collector according to any of the preceding claims, wherein the tubes (12) are made of polyethylene.
